# EUROPEAN PATENT APPLICATION

(11) **EP 2 669 647 A2**
(43) Date of publication of application: **04.12.2013**
(21) Application number: 13169856.5
(22) Date of filing: 30.05.2013
(51) Int. Cl.: G01K 11/12

(54) **Electrical appliances with thermochromic inks applied in high visibility areas as thermal state indicator mechanism**

(30) Priority: 30.05.2012 CO 12090417
(71) Applicant: Landers y Cia S.A., Medellin (CO)
(72) Inventor: Juan Tahta, Alexis, Medellín (CO); Restrepo Zea, Alejandro, Medellín (CO)
(74) Representative: Curell Suñol S.L.P.

(57) **Abstract**

Electrical appliances comprising thermochromic inks in zones of high visibility for the user are disclosed, as a mechanism to know by simple observation their thermal state (cold or hot). Said electrical appliances correspond to any appliance that uses electricity as a mechanism to generate useful thermal energy for either food processing (sandwich maker, rice cooker, ovens, roasters) or home maintenance (iron, stove, among others), and therefore during its use may reach a dangerous temperature for the physical integrity of the persons handling it. Thermochromic and photochromic inks are applied in zones of the electrical appliances, where the user may easily see the color change during use, as in zones where there is no direct contact with food and wherein it is appropriate to notice the possibility of burns by hot surfaces, which, depending on the type of electrical appliance can be in upper or side surfaces of such appliances. This system allows using safely electrical appliances showing variable temperature during their manipulation and use, also achieving a greater useful life of the incorporated thermochromic points due to their strategic localization.

## Description

The present invention refers to electrical appliances (that is, any appliance that uses electricity as mechanism to generate useful thermal energy for either food processing or home maintenance, and that therefore may reach a temperature that is dangerous for the physical integrity of the persons manipulating it) comprising thermochromic inks applied in areas of high visibility for the user and are not in direct contact with food, as an indicator mechanism of the temperature of said electrical appliances that are easily observable by the user and therefore allows eliminating or at least reducing accidental burns.

### Technical Background

Thermochromic inks are chemical substances characterized because they undergo a color change (reversible or irreversible) as a result of a temperature change. Generally, printed thermochromic inks are colored under the transition temperature and change to transparent or to a clearer color when they are heated above the transition temperature range.

These inks are available in several colors and activation temperatures, being the activation temperature the temperature above which the ink changes completely to its final transparent or clear color point. Color starts changing approximately at 4° C below the activation temperature. Examples of activation temperatures are 15 °C, 31 °C and 45°C. However, nowadays thermochromic inks with activation temperatures in the range between -5°C and 65°C are known.

If the color change is irreversible, the thermochromic inks recover their original color after being submitted to a cooling process which allows reducing the temperature below the transition temperature. However, if color change is irreversible, only one color change may be present.

Both types of thermochromic inks have different uses in industry and research. Then, for instance, the irreversible thermochromic inks are useful for proving that a product has not been submitted to any extreme temperature during transport and/or storage, or to corroborate that a surgical instrument has been submitted to an efficient sterilization process. On the other hand, reversible thermochromic inks are mainly used as optical indicators in drinks, equipment and medicines, as well as in applications related to advertisement, because the color change that they may undergo when in contact with an energy source as the body heat allows it to be used in books, cards and envelopes of great attraction for the general public.

Now, regarding the use of thermochromic inks as optical indicators of the thermal state of said electrical appliances, American Patent US 4,983,810 teaches a heating unit that comprises a surface able to heat and where at least a region of said surface is covered with a layer that incorporates a thermochromic material in enough quantity to influence in the perceived color of the layer, so that the heating unit is able to provide a visual indication of the thermal state of the surface able to heat, for instance, regarding if the said surface is still hot once the power source has been turned off.

Unfortunately, although the application of thermochromic inks on the internal surface of a heating unit allows knowing the temperature in the surface able to heat, it is absolutely known that its observation by the user is invalid, in practice, once the food to be cooked has been added, with which the warning function of the thermal state of said recipient is completely lost, for the cook and for any other unprepared user, who may be then using it in inappropriate manner leading to potential risks for their physical integrity.

On the other hand, document US 5,326,174 discloses a temperatura indicator to teach the temperature condition of an object while it is subjected to an external temperature source, where said temperature indicator includes an external carcass substantially transparent with a structure that includes a plurality of heat receptor elements that allow to mold thermal diffusion of the object.

According to authors of the said priority, the indicator also includes a temperature measurement device in thermal contact with the structure of modelled to measure the temperature in the external carcass and to indicate the temperature condition of the object.

However, the mechanism above is not convenient because of its complexity, every time that its functioning requires a several modules that should be added to the object to heat, and signals generated to indicate the temperature reached by said object are not easily perceptible by the user.

According to the above, it is absolutely clear that there was a need in the state of the art for developing electrical appliances which allow the optimal use of thermochromic inks as temperature indicators, ensuring its full visibility by the user independently if the use is made outdoors or in enclosed areas, and also increasing stability and duration.

### Basic features of the invention

Now, taking into account the teachings of the state of the art above and based on the technical features of the different types of objects with mechanisms for the determination of the thermal state known so far, the applicant of the studied invention has developed novel electrical appliances with thermochromic inks applied in high visibility zones as an indicator mechanism of the thermal state.

In this sense, the applicant of the studied invention developed electrical appliances comprising thermochromic inks in zones of high visibility for the user, as a mechanism to know by simple observation their thermal state (cold or hot), and wherein said electrical appliances corresponds to any appliance that uses electricity as a mechanism to generate useful thermal energy for either food processing (sandwich maker (special toasters for toasting sliced bread with some ingredient therein), rice cooker, ovens, friers) or home maintenance (iron, stove, among others), and therefore during its use may reach a dangerous temperature for the physical integrity of the persons handling it.

Thermochromic inks are applied in zones of the electrical appliances where the user may observe easily the change of color during use, as in zones that are not in direct contact with food and where it is convenient to warn the possibility of burns by hot surfaces, which, depending on the type of electrical appliance, may be in upper or side surfaces of said appliances.

This novel design allows using safely the electrical appliances showing variable temperature during manipulation and use, achieving like this a greater useful life of the incorporated thermochromic points given their strategic localization on the external surface of the electrical appliances.

### Detailed Description of the Invention

In addition to the outlined above, the object of the present application and the technical advantages achieved by the inventor may be noticed in detail through the following description of the electrical appliances comprising thermochromic inks in zones of high visibility for the user and that are not in contact with food, referring to the accompanying drawings, wherein:

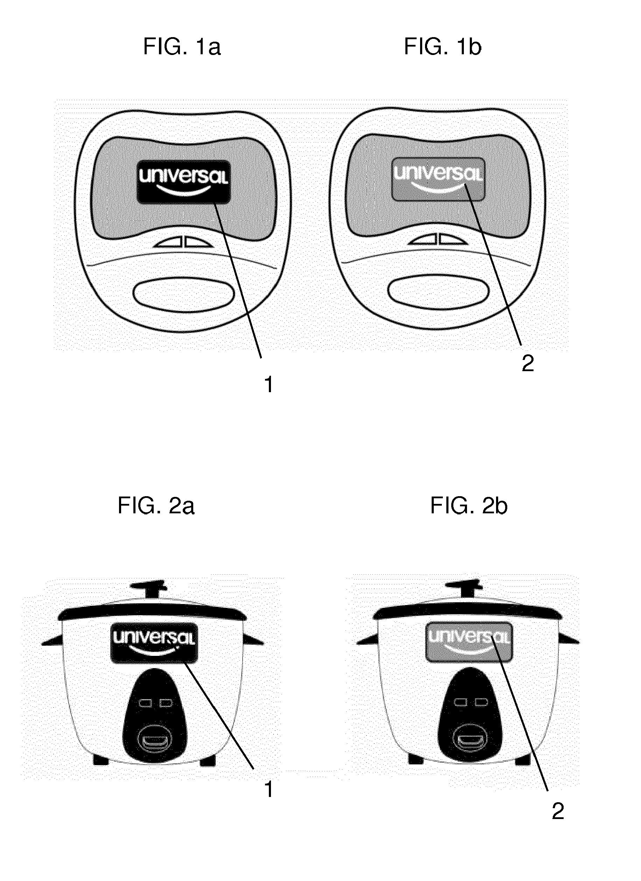

FIGURE 1a is a schematic view of a sandwich maker comprising thermochromic inks according to the present invention, wherein the thermochromic ink is applied in zones of high visibility for the user and that are not in contact with the food. FIGURE 1b is a comparative schematic view of the sandwich maker when the thermochromic ink has changed colors or discolored because of a temperature increase.
FIGURE 2a is a schematic view of a rice cooker according to the present invention, to which thermochromic inks have been applied in zones of high visibility for the user and that are not in contact with food. FIGURE 2b is a comparative schematic view of the rice cooker when the thermochromic inks have changed or discolored color because of a temperature increase.

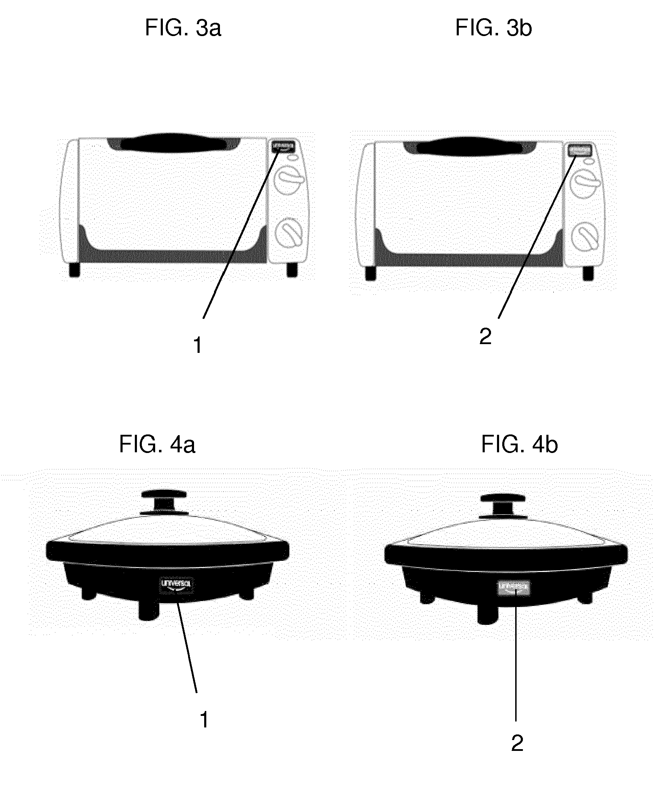

FIGURE 3a is a schematic view of an oven according to the present invention, to which thermochromic inks have been applied in zones of high visibility for the user and that are not in contact with food. FIGURE 3b is a comparative schematic view of the oven when the thermochromic inks have changed color or discolored because of the temperature increase.
FIGURE 4a is a schematic view of a roaster according to the present invention, to which thermochromic inks have been applied in zones of high visibility for the user and that are not in contact with food. FIGURE 4b is a comparative schematic view of the roaster when the thermochromic inks have changed color or discolored because of the temperature increase.

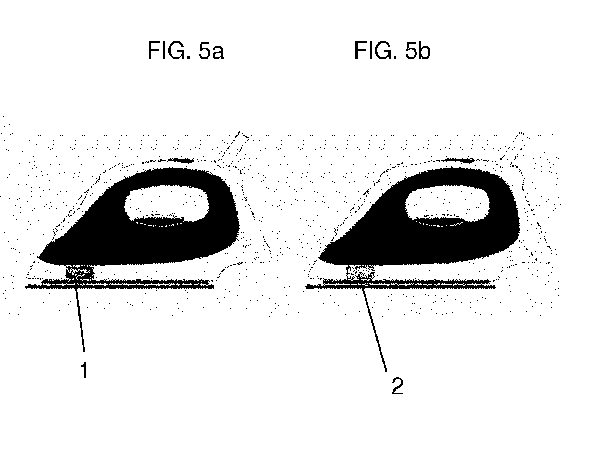

FIGURE 5a is a schematic view of an iron according to the present invention, to which thermochromic inks have been applied in zones of high visibility for the user and that are not in contact with food. FIGURE 5b is a comparative schematic view of the iron when the thermochromic inks have changed color or discolored because of the temperature increase.

In the figures it has been marked with reference 1 the thermochromic ink before being heated, and with reference 2 the thermochromic ink after being heated and being still at a high temperature, over the activation temperature.

Now, referring to figures 1 to 5 of the application, the thermochromic ink may be applied on the electrical appliances in one or more zones characterized by being of high visibility for the user and besides because they do not contact the food (this in the case of those electrical appliances destined to cook or food conservation). Preferably, the thermochromic ink is applied in between one to four zones of the electrical appliance, the above with the purpose of allowing to warn the user about the thermal state of said appliance independently of the position of the appliance or the view angle the user has of it.

Electrical appliances may be chosen between the group formed by sandwich makers, rice cookers, ovens, roasters and any other kitchen appliance or for home maintenance that uses electricity as mechanism to generate useful thermal energy.

Depending on the type of electrical appliance, there are different zones where the thermochromic ink may be applied without moving aside of the spirit of the invention. Then, for instance, thermochromic ink may be applied in one or more zones selected from upper surface and anterior, posterior and side walls.

Specifically, thermochromic ink may be applied in zones where the possibility of burns by hot surfaces should be warned, as in zones where the user may observe the color change of the thermochromic ink as a result of temperature changes in the surface of such electrical appliances.

The electrical appliance may be made of a material selected from aluminum, steel, stainless steel, phenolic resin, polypropylene, ABS, silicate, porcelain or any other material allowing manufacturing an electrical appliance suitable to resist high temperatures.

The thermochromic ink applied over one or more zones of the electrical appliance may be selected from polymeric inks, epoxic inks, polyurethane-based inks or any other ink available in the market that is suitable to be applied over an electrical appliance. On the other hand, said thermochromic ink may be applied using serigraph, pad printing, screen, hot-melt stickers, or any other industrial process allowing their correct adhesion on electrical appliances according to the present invention.

The technique with which the thermochromic ink is applied depends on the application zone over the electrical appliance.

The thermochromic ink applied on one or more zones of the electrical appliance may show any color or aspect cold and hot, given that the technical objective sought through the present invention is that the cook or user may easily perceive a signal indicating the thermal state of the external surface of said electrical appliance, which may be achieved independently of the color observed when cold and hot.

The optical change perceived in the thermochromic ink applied on the electrical appliances according to the present invention, after passing the activation temperature may be a change in color or a loss of color and said optical change may be perceived after achieving a temperature in the range between 30 °C and 80 °C, preferably between 45°C and 65°C. Said temperature of activation will depend on the type of thermochromic ink applied.

The thermochromic ink may be applied on the electrical appliances forming a round, squared, rectangular or any other geometric shape, and also it may be applied on different sizes, depending mainly on the size of the electrical appliance.

Based on the previously mentioned, it is clear that the electrical appliances according to the present invention are characterized by allowing the user to be aware of the thermal state (cold or hot) of said electrical appliances by simple observation, independently if in the case of appliances such as sandwich makers, rice cookers, ovens and roasters, among others, the food to cook or to conserve has been already placed or remain in the cooking area, fact that represents an important advance in the state of the art because the alert mechanism is completely reliable and does not depend on variables such as the position of the electrical appliance, the view angle of the user and even less of the presence or absence of food in the cooking area.

Likewise, it is very important to remark that, given that the thermochromic ink is not applied on the internal surface of the electrical appliances, and therefore, does not contact directly the thermal source and the food, their degradation is less compared to those products where the thermochromic ink is applied in the bottom of said electrical appliances.

## Claims

1. An electrical appliance **characterized by** comprising a thermochromic ink applied in one or more zones of said electrical appliance that are of high visibility for the user.

2. The electrical appliance according to claim 1, which is chosen from the group formed by sandwich makers, rice cookers, ovens, roasters and any other kitchen appliance whose use requires a power source and where the thermochromic ink is applied in zones of said electrical appliance that are not in contact with food.

3. The electrical appliance according to claim 1, which corresponds to an iron or any other appliance for home maintenance that uses electricity as mechanism to generate useful thermal energy.

4. The electrical appliance according to any of the claims 1 to 3, wherein the thermochromic ink is incorporated in the upper surface of said electrical appliance.

5. The electrical appliance according to any of the claims 1 to 3, wherein the thermochromic ink is incorporated in the side external walls of said electrical appliance.

6. The electrical appliance according to any of the claims above, wherein the thermochromic ink changes color or discolor when the zones where they are incorporated reach a temperature preferably in the range between 45°C and 65 °C.

7. The electrical appliance according to any of the claims above, wherein the said electrical appliance is manufactured in a material selected among aluminum, steel, stainless steel, phenol resin, polypropylene, ABS or silicate.

8. The electrical appliance according to any of the claims above, wherein the thermochromic ink is applied over the said electrical appliance using serigraph, pad printing, screen or hot-melt stickers.
